**Europäisches Patentamt**

**European Patent Office**

**Office européen des brevets**

(19)

(11) Publication number: **0 095 859**
A2

# EUROPEAN PATENT APPLICATION

(12)

(21) Application number: **83302820.2**

(22) Date of filing: **18.05.83**

(51) Int. Cl.³: **B 65 G 47/26**

(30) Priority: **27.05.82 US 382593**

(43) Date of publication of application: **07.12.83**
**Bulletin 83/49**

(84) Designated Contracting States: **BE DE GB LU NL SE**

(71) Applicant: **Figgie International Inc., 4420 Sherwin Road, Willoughby Ohio 44094 (US)**

(72) Inventor: **Sandusky, Donald L., 1319 Sportsmans Drive, Jeffersonville Indiana 47130 (US)**

(74) Representative: **Allen, Oliver John Richard et al, Lloyd Wise, Tregear & Co. Norman House 105-109 Strand, London, WC2R 0AE (GB)**

(54) Accumulating chain conveyor.

(57) An accumulating chain conveyor includes a plurality of accumulation zones (zone 2, 3, 4 . . .), each having preferably a pair of load carrying chains, (17, 18, 19, 21, 22 . . .) seperate and independent of the load carrying chains of adjacent zones. Each load carrying chain constitutes a continuous closed loop within its respective zone, and is capable of being driven independently of the load carrying chains of other zones. Improved load sensors (85) are provided to eliminate false signals due to discontinuous load surfaces.

EP 0 095 859 A2

ACTORUM AG

-1-

ACCUMULATING CHAIN CONVEYOR

This invention relates to accumulating chain conveyors and more particularly to chain conveyors defined by a plurality of zones in which loads can be accumulated.

Ordinary chain or belt conveyors for continuously conveying loads are well known. Such conveyors are particularly useful for conveying loads such as pallets or skids on which items are mounted. Such pallets may have discontinuous bottoms, rendering use of roller type conveyors inadvisable. These known conveyors generally include two elongated parallel conveying chains or belts supported for movement, in a conveying direction, above or within a conveyor frame. A drive powers the chains or belts and they serve to convey loads from one end of the conveyor to the other.

Since such conveyors utilize one or two chains or belts each in a continuous loop throughout a conveyor section, it is difficult to accumulate loads within such section. Two modes of providing such accumulation are known. In a first mode, load rests are disposed along the conveyor. The chains or belts are mounted on retractable carriages which can be lifted to cause the chains to engage, lift and convey the loads. When the load reaches a desired location, the carriage at that point is lowered to drop the chains or belts, thereby resting the load on a load rest. The chains or belts continue to drive, however, in other zones as other carriages may continue to be lifted, moving loads in other portions of the conveyor.

A second mode of accumulating loads in a chain conveyor having continuous chain runs is to provide load lifts along the conveyor. Loads are continuously conveyed until they reach a desired stop or accumulate position. At this time, load lifts are actuated to engage and raise the load off the conveyor chain, which continues to run but which leaves this load in a stalled position until the load lifts are deactivated.

Each of these systems is accompanied by inherent problems. In the first mode, the conveyor must be designed to include a complex system for lifting and supporting the conveyor chains and the loads. In the second mode, the provision of lifts may generate handling problems. For example, where loads are non-uniform, or when one load too closely follows another, a lift may raise only a portion of load, such as the front or rear end, causing it to tip over or jam. This may occur particularly where a portion of the load remains in contact with the conveyor chain.

Moreover, loads such as pallets having discontinuous bottom surfaces may miss a load rest of the first mode, or a load lift may not fully engage a mis-indexed load in a system like that of the second mode, and cause jamming or tipping.

A preferred embodiment of the invention includes a chain conveyor defined by a plurality of accumulating zones. Each accumulating zone includes a pair of load carrying chains, each chain forming a closed loop within the zone and thus being entirely independent of the load carrying chains of adjacent zones. Each chain pair is selectively driven and stopped independently of the pairs of other zones, in response to the presence of loads in predetermined zones. Accordingly, there is no continuous conveying chain throughout the conveyor, rather, each zone is independent of the other insofar as the conveying chains are concerned. It is accordingly unnecessary to lift the conveying chains to engage loads, or to lift loads from a continuously driven chain.

Moreover, the preferred embodiment of the invention includes elongated load sensors in each zone, spanning any discontinuity in the pallet or load. The sensor is located at a downstream position in each zone so that a package passing over the downstream portion of the zone is constantly operatively engaged with the sensor. The problems of prior conveyors as discussed herein are thereby overcome, and the advantages of independently driving conveying elements are obtained in a chain conveyor for loads such as pallets which may have discontinuous bottoms.

A common power train is provided for driving the zones and respective clutch means are interposed in each zone between the power train and the chain pairs of the zone for selectively coupling
and uncoupling the power train to the chain pair for
conveying and for accumulating.

These and other objects and advantages will become readily apparent from the following detailed description of a preferred embodiment and from the drawings in which:

Fig. 1 is a plan view of an accumulating chain conveyor according to the invention;

Fig. 2 is an illustrative elevational view of the conveyor of Fig. 1;

Fig. 3 is an illustration of one form of control means for controlling the conveyor of Fig. 1;

Fig. 4 is a more detailed plan view of the conveyor of Fig. 1 showing zone 2 and adjoining portions of zones 1 and 3;

Fig. 5 is an elevational view of the conveyor illustrated in Fig. 4;

Fig. 6 is a cross sectional view taken along line 6-6 of Fig. 4; and,

Fig. 7 is a cross sectional view taken along line 7-7 of Fig. 4, and illustrating the elongated load sensors of the invention.

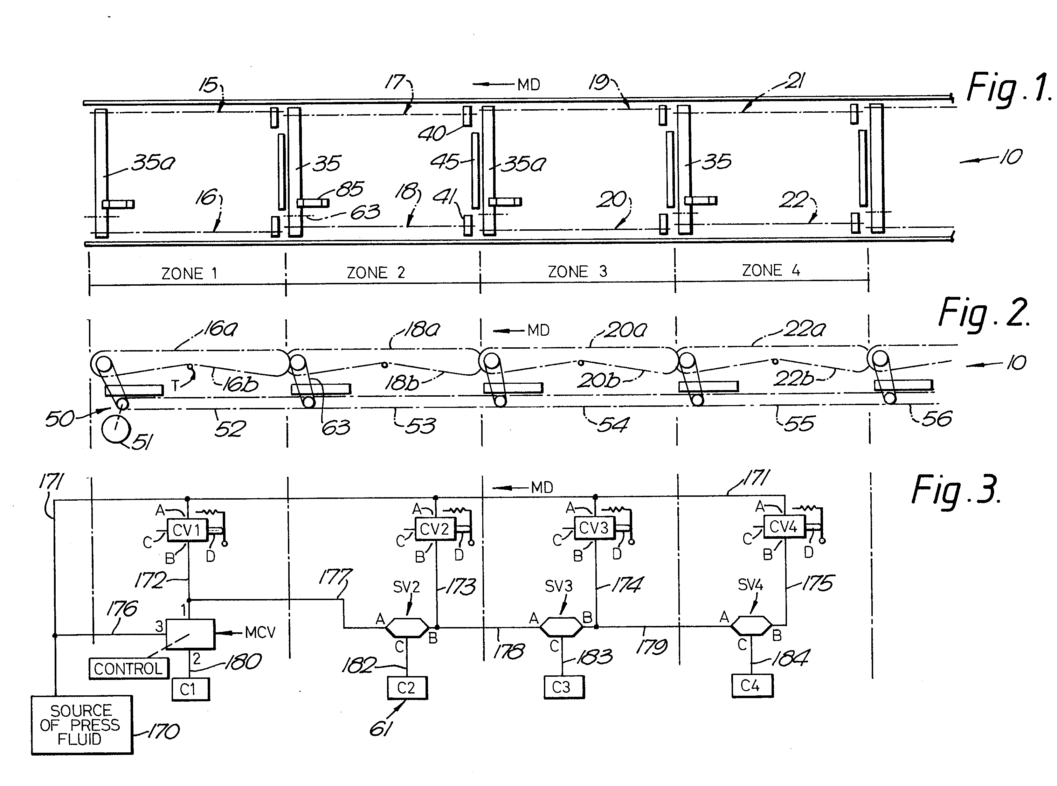

Turning now to Fig. 1, an accumulating chain conveyor 10 is defined by a plurality of accumulating zones. Such zones are indicated as zones 1, 2, 3 and 4, as shown in the drawing, although any suitable number of zones could be used. While each of these zones comprises an accumulating zone, zone 1 functions as and will also be referred to as a discharge zone, as will be described hereinafter.

It will be appreciated that with the exception of the hereinafter described control in zone 1, all the zones are essentially similar. Unless as otherwise noted, like parts of each zone are designated identically.

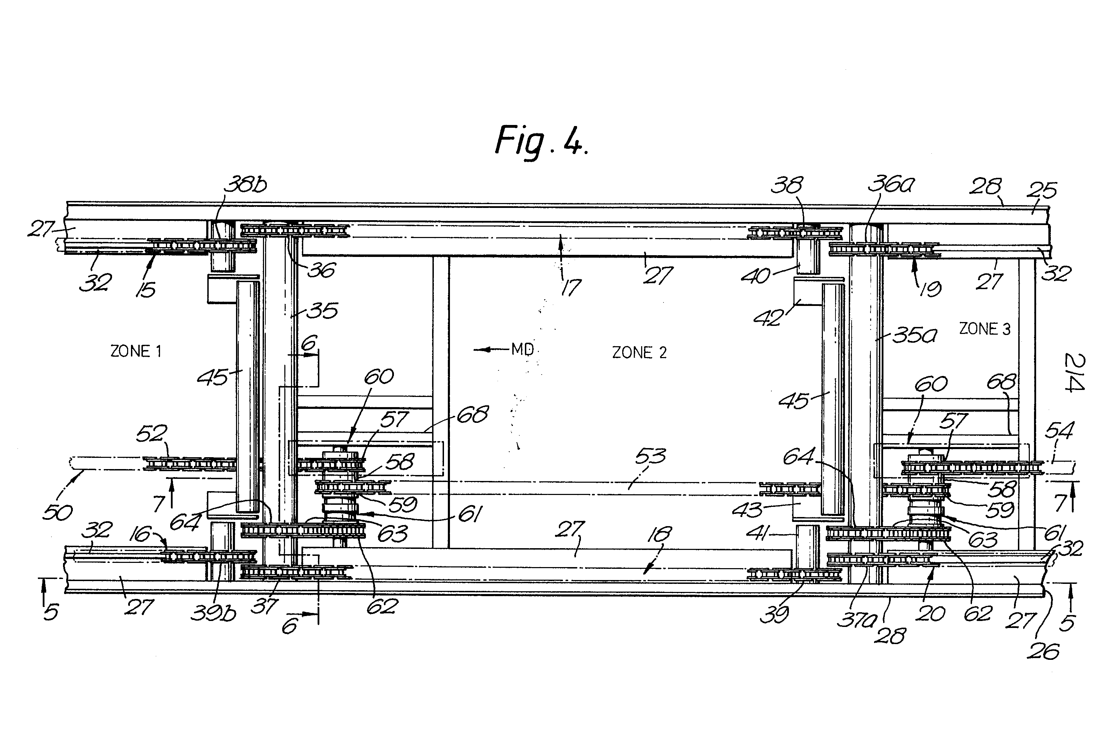

As illustrated in Fig. 1 and as best seen in Fig. 4, each zone, such as zone 2, includes a pair of load conveying chains. These could be cables, belts or other types of flexible strand means depending on the conveyor application, however, chains are preferred.

For the purposes of description, each of these chains will be provided with a different number. Accordingly, the pair of chains in zone 1 include chains 15 and 16; the pair of chains in zone 2 include chains 17 and 18; the pair of chains in zone 3 include chains 19 and 20; and the pair of chains in zone 4 include chains 21 and 22. Additional zones such as that indicated adjacent zone 4 in Fig. 4 also have like pairs of chains.

Of course, a single conveying chain in each zone disposed, for example, in the center of the conveyor, could be used, however, a chain pair is preferred.

Each of the aforementioned chains comprises a completely independent chain loop within its respective zone, such loops having an upper load bearing run, referenced by the number of the chain together with the suffix "a" (see Fig. 2), and a lower return run referenced by the number of the chain together with the suffix "b".

If desired, each load carrying chain, such as chains 15 and 16 of zone 1, are provided with suitable chain tensioner T, as are well known, to maintain appropriate chain tension.

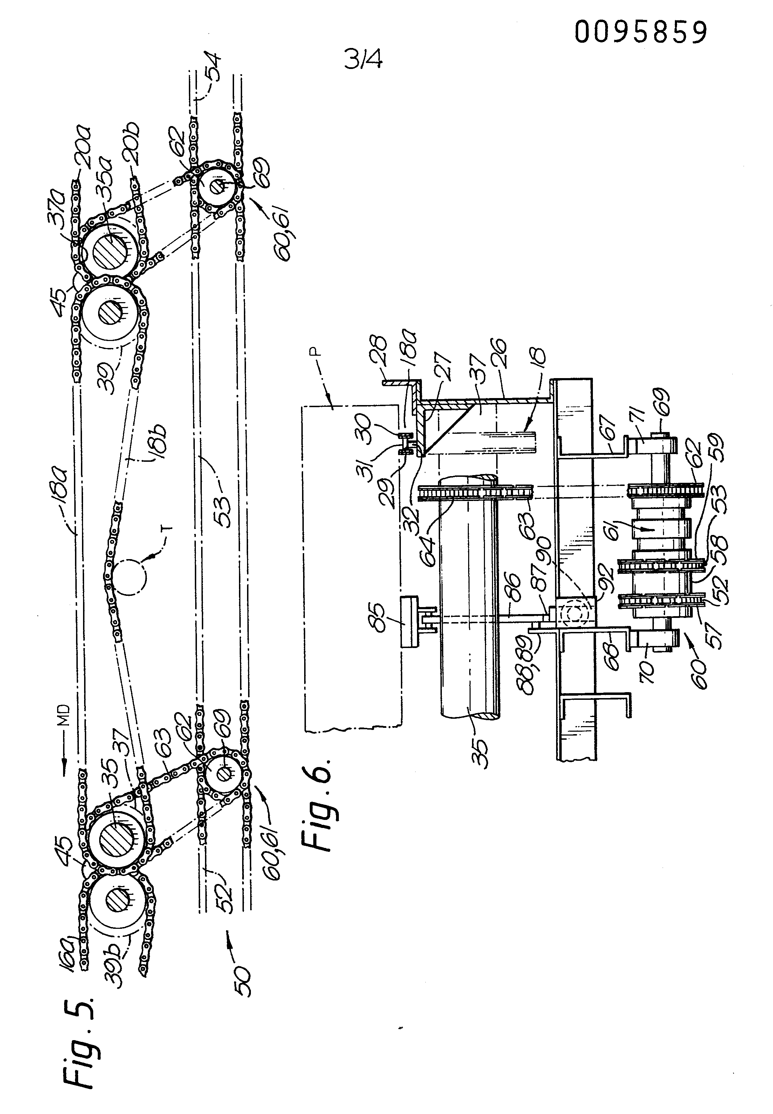

As perhaps best seen in Figs. 4 and 6, each of the chains is mounted between or within elongated conveyor side rails such as channels 25 and 26. It is possible to mount the chains lower than the conveyor side rails 25 and 26 and therebetween. Alternatively, it is possible to mount the chains above the conveyor side rails so that the side rails do not interfere with any load overhang. As shown in Fig. 6, the chain 18 is mounted on a elongated bracket 27 which is secured to the channel 26. The opposite chain of the chain pair of each zone is similarly mounted on the other side of the conveyor. A load guide, such as guides 28, may also be provided to help maintain loads on the conveyor.

As shown in Fig. 6, the chain 18 has chain side plates 29 and 30 joined by chain rollers 31. An elongated chain support 32 is mounted on the brackets 27 for supporting the chain in a rolling configuration. Elongated support 32 comprises an elongated bar having a width less than the width of the roller 31 and supporting the roller 31 so that

0095859

the side plates 29 and 30 are carried above the upper surface of the bracket 27. The rollers thus roll on the elongated support 32 while the side plates 29 and 30 support a load, such as the pallet P, thereabove.

Alternatively, the chains 18 can be supported by a chain guide which supports the side plates of the chain for sliding motion thereon.

It will further be appreciated that each zone includes a downstream or a lead roller 35 on which are mounted first and second sprockets 36 and 37. Sprockets 36 and 37 (Fig. 4) support the respective chains 17 and 18 of zone 2 at the downstream end of the load conveying runs 17a and 18a of the chains 17 and 18 and shown in zone 2. Third and fourth sprockets 38 and 39 (Fig. 4) are mounted on the conveyor rails 25 and 26 adjacent the upstream end of each zone, such as shown in zone 2 of Fig. 4. Sprockets 38 and 39 may be mounted on rollers or hubs 40 and 41, respectively, in turn secured to brackets 42 and 43 at inboard ends in order to rotationally support the sprockets 38 and 39.

Also secured to the brackets 42 and 43 is a bridging roller 45 for bridging the distance between each respective zone. The upper surface of the roller 45 is in approximately the same plane as that defined by the upper load bearing runs of the various chains of the zones.

Turning to Fig. 4, it will be appreciated that the sprockets 36a and 37a of zone 3 are located inboard roller 35a of the positions of sprockets 36 and 37 on roller 35 of zone 2. This is to secure the least possible distance between the ends of the planes defined by the upper load bearing runs of chains 19 and 20 and the upper load bearing runs of chains 17 and 18 for the two adjacent zones. This permits the sprockets of each zone to be slightly offset and the bridging roller 45 is utilized to bridge any spacing between the load carrying runs of adjacent zones. Accordingly, the upstream most end of zone 3 would be similar to the upstream end of zone 1, where the sprockets 38b and 39b of zone 1 are mounted inboard the sprockets 36 and 37 of the roller 35 of zone 2.

Said in another way, the load carrying chains of each zone are alternately spaced inwardly and outwardly of each other, as perhaps best illustrated in Fig. 1.

As shown illustratively in Fig. 2 and in more detail in other drawings, the conveyor 10 includes a common power train 50 for driving the load conveying chains of the various zones. The power train 50 includes a drive motor 51 operatively connected to a leading power train chain 52. Chain 52 is connected to continuously drive power train chain 53, that chain is connected to continuously drive power chain 54 in zone 3, and so on, throughout the conveyor. The power train then includes the motor and the various common power chains 52 through 56, for example, all of which are continuously driven to power the selectively driven zones 1 through 4, as will be described.

As shown in Fig. 6, the power train chain 52 is entrained around a sprocket 57 secured by means of a hub 58 to a sprocket 59, such as in a double-single sprocket. Alternatively, two "B"-type connected sprockets could be used. Power chain 53 is secured to sprocket 59. Thus, as power chain 52 is driven, hub 58 is driven, sprocket 59 is driven, and power chain 53 is also driven. This continues for each zone of the conveyor.

Sprockets 57 and 59, as shown in zone 2 of Fig. 4, together with hub 58, comprise part of a drive means 60 for selectively coupling the power train 50 to the zones. The drive means includes then a connection to the common power train as has been described, together with a clutch means 61. Clutch means 61 includes a sprocket 62 driving a drive chain 63. Roller 35 (Fig. 4) is provided with a sprocket 64 for driving the roller 35 and the sprockets 36 and 37 in order to drive the respective chains 17 and 18 in zone 2.

When the clutch is engaged, the motive power from the power train 50 is coupled through the sprockets 62 and 64 and drive chain 63 to a roller 35, whereby the chains 17 and 18 of zone 2 are driven, and likewise for each other zone which is similarly constructed. When the clutch is disengaged, the motive power from the continuously driven power train 50 is uncoupled from the roller 35 and the chains 17 and 18 are not driven, thus stopping all load bearing chains within the zone and stopping any load happening to be on those chains, for accumulation purposes.

Accordingly, even though the power train is continuously driven, each zone is selectively driven by means of the drive means 60 and clutch means 61 in order to convey loads on the zone or to accumulate loads on the zone in response to the condition of other zones, as will be described.

While it comprises no part of this specific invention, it has also been found suitable to utilize a pneumatic control means (Fig. 3) in order to control the driving and accumulation functions of the conveyor 10. Such control means, as shown in Fig. 3, is a pneumatic control means and is operative to energize and de-energize the clutch means 61, which preferably comprises a pneumatic clutch.

Any suitable pneumatic clutch well-known in the industry may be utilized. One such suitable clutch is that clutch identified by the model designation "AST" manufactured by Mach III Clutch at 106 Kenner Street, Ludlow, Kentucky 41016. Such a clutch preferably comprises a pilot mount air clutch having a through shaft accommodation. In use, the clutch is keyed to a shaft which is driven by driven sprockets, such as sprockets 57, 59 (Fig. 6). The clutch incorporates a sprocket which is free to rotate about the clutch in one operating mode, the sprocket being similar to sprocket 62 (Fig. 6). The clutch further includes clutch plates which are frictionally engaged to couple the clutch sleeve keyed to the driven shaft with the clutch hub, which is coupled to the sprocket such as sprocket 62. When these plates are actuated in an axial direction so as to engage each other as a result of pneumatic force applied thereto, the clutch engages to drive the sprocket, such as sprocket 62, and thus to drive the particular zone with which the clutch is associated, as described herein. When pneumatic pressure is released, the clutch plates are biased apart from each other, whereby the drive coupling is removed through the clutch means and the load carrying chains of the particular zone are not driven.

As shown in Fig. 6, the clutch means 61 is secured to the conveyor by means of channel brackets 67 and 68 and hangs below the conveyor where the power train 50 is located. Preferably, the clutch means 61 is disposed slightly upstream of the lead or downstream most roller 35 in each zone, as shown in Fig. 4.

As seen in Fig. 6, then, the sprockets 57, 59 and hub 58 are secured to a shaft 69 which is mounted in bearings 70 and 71 beneath the conveyor. This shaft preferably extends through and is keyed to the clutch 61, while the sprocket 62 is rotatable with respect to the shaft 69 and is selectively coupled to the shaft by means of the clutch means 61.

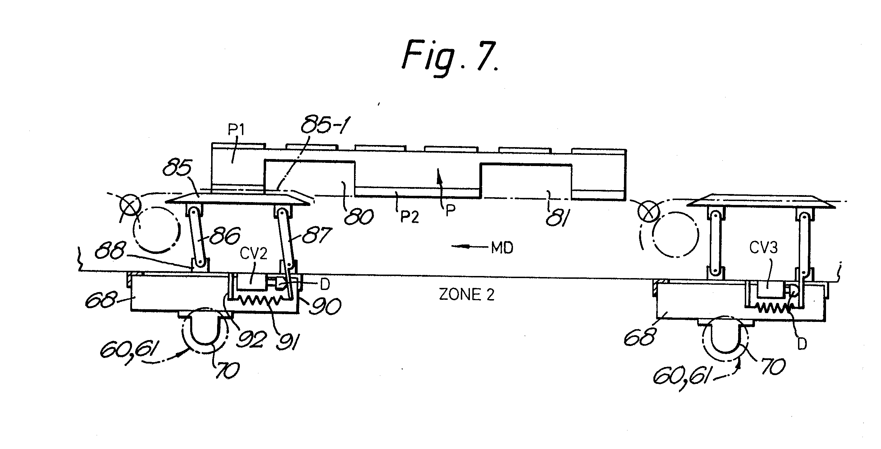

As shown in Fig. 7, it is frequently desirable to convey pallets, such as pallet P, having discontinuous portions, such as at 80 and 81 in the bottom surface of the pallet. As such loads are conveyed along the conveyor, it is necessary to sense the loads in order to determine the condition of the conveyor and to provide for accumulating, as will be hereinafter described. Where the loads have discontinuous areas in their bottom surfaces, such as at 80 and 81, a normal roller type sensor could rise into such areas and would falsely indicate the departure of the load from the zone, while the load was actually well within the zone. Accordingly, it is necessary to provide sensing means for accurately sensing the position and location of a load passing over the downstream portion of any particular zone. To this end, an elongated load sensor 85 is provided according to the invention as as best seen in Fig. 7. Load sensor 85 comprises an elongated load sensing element mounted on a parallelogram linkage comprising links 86 and 87 and pivot brackets 88 and 89. Link 87 includes a depending paddle 90 which extends beneath the bracket 89 for engagement with a pneumatic control valve CV-2, as shown in Fig. 7. The control valve is connected to the pneumatic control means of Fig. 3, as will be described. As shown in Fig. 7, the paddle 90 is connected by a spring means 91 to a frame member 92, so that the load sensor 85 is continuously biased into an upstream direction and into the raised condition, as shown by the dotted lines 85-1. When the load sensor is engaged by a pallet, it is lowered to the solid line position shown in Fig. 7, with the links 86 and 87 rotating, thereby rotating the paddle 90 away from the control valve CV-2 in order to operate the valve.

It will be appreciated that the elongated sensor is longer than any possible discontinuity in the load, pallet P. Accordingly, as the forward end portion P1 of the pallet passes over the sensor 85, the intermediate portion, P2, of the pallet will engage the upstream end of the elongated load sensor and it will continue to be depressed, thereby eliminating any false signal that the pallet has existed from the zone. Once the pallet entirely clears the zone, the elongated sensor linkage is free to rotate in a clockwise direction, raising the sensor to its position 85-1 and moving the paddle 90 toward the control valve CV-2. This movement of the paddle depresses the plunger D of the control valve CV-2 to operate the valve, as will be described.

In Fig. 7, the position of the elongated sensor in a depressed condition is shown in zone 2, while the next upstream zone 3 discloses the elongated sensor in its raised position with no pallet thereon.  Each zone includes a similar sensor and control valve.

Turning now to Fig. 3, a control means suitable for controlling the conveyor of the invention described herein will now be described.  It will be appreciated that any suitable control means can be utilized for any suitable drive means to selectively couple and uncouple the load conveying chains of each independent zone from a motive power in order to drive the chains for conveying loads through the zone, or to stop the chains for accumulating loads in the zone.  The specific pneumatic control means of Fig. 3 has been found particularly suitable for use in this regard.  While a pneumatic control means is described, it will be appreciated that hydraulic or electrical control means and drive means could be utilized as well.

Turning now to Fig. 3, it will be appreciated that the clutch means of each zone are diagrammatically shown in the figure and designated as C1, C2, C3 and C4.  The numeral 61 is applied to the clutch means C2, as that is consistent with the description in the accompanying drawings of the clutch in that zone.  It will be appreciated that the clutches, however, are similar.

The control means for the accumulating chain conveyor includes a source 170 of pressurized fluid, such as compressed air, having a main supply conduit 171 for supplying the valves and the clutches as will be described.

The control means for each zone includes a control valve, designated CV1, CV2, CV3 and CV4 for the respective zones 1 through 4, as shown. Each control valve constitutes a normally closed, three-way, poppet valve having an input, an output and an exhaust port for venting the output side of the valve, and a control stem or plunger for actuation by the paddle 90, as has already been described. The input port A of each control valve is connected to the supply conduit 171, and the output port B of each control valve is connected to the respective conduit 172, 173, 174 and 175 as shown in Fig. 3. The exhaust port C of each control valve is simply vented to the atmosphere. Each of the valves is normally positioned with the plunger pushed into the valve by paddle 90 to connect the ports A and B in the valve, so as to pressurize the conduits 172 through 175 when pressure is available in the supply conduit 171. When the valves are actuated, however, by means of the paddles 90, so as to release pressure on the respective plungers D of each valve, the plungers are extended (by spring or other means within the valves) and the valves are operable to disconnect their ports B from their ports A and to

0095859

vent the ports B and their respective conduits 172 through 175 through the exhaust ports C. In this regard, it will be appreciated that the plungers D of each control valve can be directly actuated by the paddles 90. Ball actuators or other linkages can be used for operating the control valves.

Any suitable valve can be used for the control valve. One valve found to be suitable is a valve made by the Humphrey Products Company of Kalamazoo, Michigan and distributed under their model designation 250P-3-10-21.

A master control valve, MCV, is provided in discharge zone 1 only and has an inlet port 1, an inlet port 3, and an outlet port 2. Inlet port 1 is connected to the conduit 172 from the control valve CV-1. Inlet port 3 is connected through a conduit 176 to the supply conduit 171. Outlet port 2 is connected to the conduit 180, which extends to the clutch Cl. It is noted that the conduit 172 is connected directly to a conduit 177, leading to an inlet port A of a shuttle valve SV-2 located in zone 2. It is also noted that the inlet port 3 and the inlet port 1 of the master control valve MCV are never connected, and the conduit 177 can only be pressurized through the control valve CV-1.

The master control valve MCV comprises a solenoid operated poppet valve which is selectively actuated to alternately connect the inlet port 1 with outlet port 2, or the inlet port 3 with the outlet port 2. While any suitable valve can be used to perform this function, one particular valve which has been found suitable is a valve made by Mac Valves, Inc. as its Series No. 100, selector, in-line, normally closed and normally open valve. Such a valve is connected to electrical or other suitable control means (labeled control) for operation, as will be hereinafter be described. Also, the valve MCV could be manually operated.

Each of the zones upstream of the discharge zone 1, and exclusive of zone 1, includes a shuttle valve. These are respectively designated SV-2 for zone 2, SV-3 for zone 3, and SV-4 for zone 4. Each of the shuttle valves has inlet ports A and B and an outlet port C. The inlet port A of each valve is connected to a conduit extending from the next downstream zone. Specifically, conduit 177 extends from the outlet conduit 172 of the control valve CV-1, to inlet port A of shuttle valve SV-2. Inlet port A of shuttle valve SV-3 is connected through conduit 178 and conduit 173 to the control valve CV-2. Inlet port A of shuttle valve SV-4 is connected through conduits 179 and 174 to the control valve CV-3, and so on through the zones.

Each of the shuttle valves comprises a poppet type shuttle (double check) valve. One such suitable shuttle valve which has been found useful is a shuttle valve referred to as the Clippard "Mini-matic" shuttle valve, Model MJSV-1, produced by the Clippard Valve Company, Cincinnati, Ohio. In each such shuttle valve, port A or port B is connected to outlet port C, depending upon the application of pressure to port A or port B, as will be described.

Further describing the pneumatic circuitry as depicted in Fig. 3, it will be appreciated that the clutch C1 is connected through conduit 180 to the outlet port 2 of the master control valve. In zone 2, the clutch C2 is connected via conduit 182 to the outlet port C of the shuttle valve SV-2. In zone 3, the clutch C3 is connected via conduit 183 to the outlet port C of the shuttle valve SV-3. In zone 4, the clutch C4 is connected via conduit 184 to the outlet port C of the shuttle valve SV-4.

It will be appreciated that the conveyor 10 (Fig. 1) according to the invention may be constructed to include the various conduits, valves and mounting means therefor in any suitable manner.

Operation

Primarily, the conveyor operates selectively in either a continuous conveying mode or an accumulation mode. In a continuous conveying mode, the conveyor functions to separate or to singulate loads on the load carrying chains. Particularly, the master control valve MCV is operated by any suitable control means to operate the valve to connect port 3 to port 2. This provides pressurized air directly from the source of pressurized fluid 170 to the conduit 180 in order to constantly pressurize the clutch C1 regardless of the presence of loads in zone 1. Pressurization of the clutch C1 effectively connects the drive sprocket 62 with the power train sprockets 58 and 59 (Fig. 6), and thereby drives the roller 35. Rotation of the roller 35 in zone 1 drives the chains 15 and 16, thereby moving any loads on zone 1 in a downstream direction and off the end of the discharge zone. Thus, looking at Fig. 1, any load on zone 1 would be moved off the conveyor in the direction indicated by the machine direction arrow MD. In this continuous mode, the load carrying chains of zone 1 are constantly driven.

The connection of the ports 3 and 2 of the master control valve MCV serves only to connect the source of pressurized fluid directly to the clutch in the first discharge zone 1. While the load remains in zone 1, it depresses the elongated sensor 85 and the paddle 90 is rotated rearwardly to operate the plunger D of the control valve CV-1, thus venting the control valve and the conduits 172 and 177. Since the control valve CV-2 may also be vented, in the condition where there is a load on zone 2 such as shown in Fig. 7, there is no pressurized air available for the clutch C2. Conduit 177 is vented and conduit 173 is vented, and the clutch of zone 2 would remain disengaged so that the load on zone 2 would remain stationary.

Once the first pallet which as one zone 1 (Fig. 7) clears the elongated sensor 85 of zone 1, however, the control valve CV-1 is relieved by paddle 90 to connect the main pressure supply conduit 171 with the conduits 172 and 177. This pressurizes inlet port A of the shuttle valve SV-2 which operates to pass pressurized air to the clutch C2. This actuates the clutch, whereby the chains 17 and 18 of zone 2 are driven to move the load or pallet P on zone 2 in a downstream direction onto zone 1. Accordingly, zones 1 and 2 are driven sequentially to discharge any loads thereon in a spaced, separated relationship. Thereafter, the upstream zones operate in accordance with the conditions of the control valve in the respective zone and in the immediately downstream zone, and the loads are conveyed at similar separations to those of the first two loads discharged.

For example, if a load is on zone 3, then the elongated sensor 85 of that zone will be depressed, venting control valve CV-3. Until the load on zone 2 clears zone 2, the control valve CV-2 is also operated to vent it. Accordingly, there would be no pressure in the conduits 173, 178 or 174 and the shuttle valve SV-3 would not receive any pressurized air. The clutch C3 then in zone 3 would remain disengaged until the load in zone 2 cleared the sensor in that zone, operating the control CV2 to pressurize the conduits 173 and 178. This would

pressurize the shuttle valve through its port A, which would then operate to pass pressurized air to the clutch C3 to drive the zone 3 and to discharge any load thereon in a downstream direction onto zone 2.

Accordingly, it will be appreciated that if a load is on the preceeding zone, an incoming load on the next upstream zone will cause that next upstream zone to be disengaged from the common power train 50 so that the load will be accumulated on the upstream zone. The load then on the upstream zone will not be conveyed further until the immediately downstream zone is clear. In addition, it will be appreciated that if there is no load, for example, on zone 2, then a pallet moving onto and through zone 3 would not cause zone 3 to be disengaged. Even though the control valve CV-3 would be operated to a vent condition, with no load on zone 2, the control valve CV-2 is operative to maintain pressure on the shuttle valve SV-3 causing the drive of zone 3 to operate continuously.

Accordingly, the conveyor operates continuously for so long as two adjacent zones are not loaded. When two adjacent zones are loaded, the upstream zone is disengaged from any drive force until the immediate downstream zone clears. Accordingly, the accumulating chain conveyor described herein functions to singulate or separate loads even when it continuously conveys, loads on upstream zones being temporarily delayed until their next downstream zone is cleared.

It will further be appreciated that the embodiment thus provides an accumulating chain conveyor defined by a plurality of zones, each of which has its own separate and independent load carrying chains which operate separately and independently of the load carrying chains of other zones. There is no need to provide any chain lifting apparatus or any load lifting apparatus to produce an accumulating function in the chain conveyor.

Moreover, the conveyor is capable of handling loads which have discontinuous bottom surfaces and false control signals indicating the presence or absence of packages or loads on the conveyor are eliminated.

CLAIMS

(1)      An accumulating conveyor defined by a plurality of accumulating zones, each zone comprising:   at least one load carrying flexible strand means, having an upper run for conveying loads in said zone and a return run;   frame means for supporting the upper run of said strand means; characterised by drive means for selectively driving the strand means in said zone and for disengaging to stop said strand means for accumulation, in response to the presence of loads in predetermined zones of said conveyor, said flexible strand means comprising a continuous loop within said zone, independent of the strand means of other zones, said flexible strand means being driven in said zone independently of the strand means of other zones.

(2)   An accumulating chain conveyor including a plurality of accumulating zones and comprising:   a separate pair of load carrying flexible chains disposed in each zone, each chain having an upper load carrying run for conveying loads in said zone and a return run;   frame means in each zone for supporting each upper load carrying run; characterised by drive means in each zone for selectively driving the chains of each zone when actuated and disengaging to stop the chains of each zone for accumulation in response to the presence of loads in predetermined zones, and each of said chains of each pair in each zone comprising an independent continuous loop within its respective zone, independent of the chains of other zones, and being driven independently of the chains of other zones.

(3)      An accumulating chain conveyor, as in claim 1 or 2, further including common power train means for providing motive power to each zone.

(4)      An accumulating chain conveyor, as in claim 3, wherein said drive means includes a clutch means in each zone for selectively connecting said common power train means to said flexible chains of each zone for driving said chains independently of the chains of other zones.

(5)      An accumulating chain conveyor, as claimed in any of claims 1 to 4, wherein each zone includes a load sensor, operatively connected to said drive means, and disposed proximate a downstream section of said zone.

(6)      An accumalating chain conveyor, as claimed in any of claims 1 to 5, for conveying loads having discontinuous lower surfaces and including a load sensor, in each respective zone, operatively connected to the drive means therein, said load sensor comprising an elongated sensing element extending in the direction of said load carrying run of said respective zone and in constant engagement with at least a portion of each load passing over a downstream section of the respective zone.

(7)      An accumulating chain conveyor, as claimed in any of claims 1 to 6, each zone further comprising; a downstream roller and first and second sprockets mounted proximate each end thereof for supporting the downstream ends of first and second chains of the chain pair in said zone, and third and fourth sprockets mounted on respective sides of the upstream conveyor portion of the zone for supporting upstream ends of said first and second chains of the chain pair in said zone.

(8)      An accumulating chain conveyor, as claimed in claim 7, including a fifth sprocket on said downstream roller, and means connecting said downstream roller to said drive means.

(9)        An accumulating chain conveyor, as in claim 8, further including a bridge roller means disposed between each zone for supporting loads between the respective load carrying runs of adjacent zones.

Fig.1.

Fig.2.

Fig.3.

ZONE 1    ZONE 2    ZONE 3    ZONE 4

SOURCE OF PRESS FLUID

CONTROL

1/4

0095859

Fig. 4.

**Fig. 5.**

**Fig. 6.**

3/4

0095859

Fig. 7.